**Europäisches Patentamt**

**European Patent Office**

**Office européen des brevets**

(11) Publication number: **0 045 230**
**B1**

# (12) EUROPEAN PATENT SPECIFICATION

(45) Date of publication of patent specification: **10.10.84**

(51) Int. Cl.³: **B 62 D 1/18**

(21) Application number: **81401094.8**

(22) Date of filing: **08.07.81**

(54) System for adjusting the position of a steering wheel on a vehicle.

(30) Priority: **30.07.80 ES 494694**

(43) Date of publication of application:
**03.02.82 Bulletin 82/05**

(45) Publication of the grant of the patent:
**10.10.84 Bulletin 84/41**

(84) Designated Contracting States:
**DE FR GB IT**

(56) References cited:
**FR-A-2 360 454**
**FR-A-2 440 303**
**US-A-3 520 209**
**US-A-4 209 074**

(73) Proprietor: **BENDIBERICA S.A.**
**Balmès 243**
**Barcelona 6 (ES)**

(72) Inventor: **Bruguera, Raimon Soler**
**Placa Comerc, 3 2 la. Esc. B**
**Barcelona - 30 (ES)**

(74) Representative: **Le Moenner, Gabriel et al**
**SERVICE BREVETS BENDIX 44, Rue François 1er**
**F-75008 Paris (FR)**

Courier Press, Leamington Spa, England.

EP 0 045 230 B1

## Description

The invention relates to a system for adjusting the position of the steering wheel of a vehicle, especially of the type comprising a deformable four link mechanism including a stationary base member secured to the vehicle, a support member rotatingly supporting the shaft holding said steering wheel, first and second crank links hinged to said base member and said support member, first and second separated hinge means fixed to said base member for connection to said first and second crank links, respectively, the operative length of said first crank link between its hinged connections to said base member and said support member being selectively adjustable, and locking means for locking said deformable four link mechanism in selected configurations.

Such a system is disclosed in document US—A—3 520 209. In said document, adjustment of the system is achieved by selectively and incrementally modifying the length of paired telescopic links by means of releasable locking pins.

There is an object of the invention to provide a system which is compact, easy to operate and permitting infinite selectable adjustment positions.

In order to meet this object, in the system according to the invention, said first hinge between said base member and said first crank link comprises a shaft journaled within said base member, said second crank link consisting of a bracket pivotable about said second hinge on said base member and having an end portion formed with an arcuate opening centered in said second hinge, said first crank link having an elongated opening, said openings being slidable along said shaft of said first hinge which is provided with a manually operable axial pressure device constituting said locking means.

With such an arrangement, the second (e.g. lower) crank link makes it possible to vary the height of the hinging point of the steering wheel shaft support member, whilst the first (e.g. upper) crank link makes it possible to pivot said shaft support member in a vertical plane, locking and unlocking of the system being achieved in a simple and efficient way.

The attached drawings show, as a non-limitative example, a preferred embodiment of the invention.

With regard to these drawings:
— Fig. 1 shows a lateral elevation, with sections of parts, of a mechanism for adjusting the position of the steering wheel which includes the improvements of the invention;
— Fig. 2 shows a front view of the same mechanism with a cross-section taken approximately at the line II—II of Fig. 1.

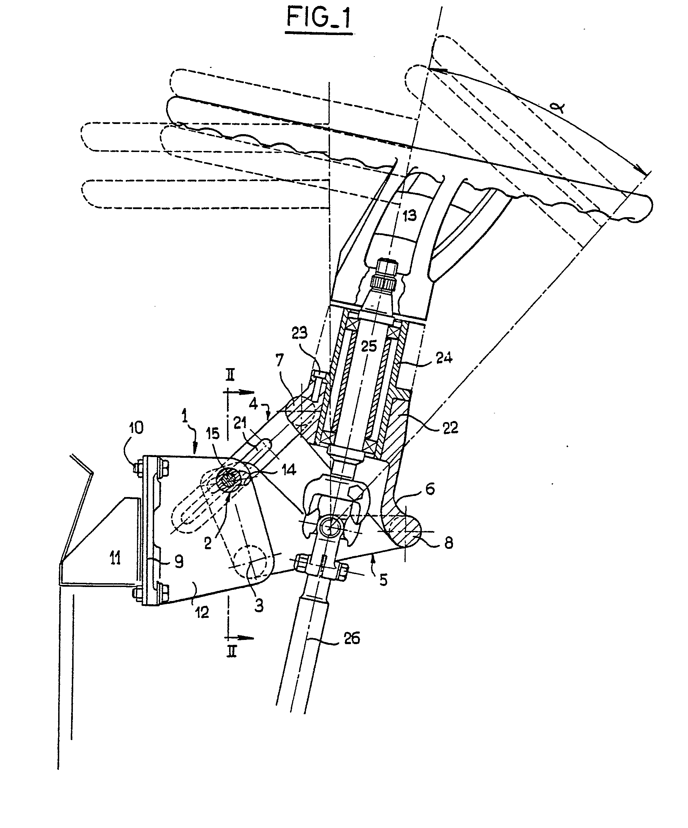

Fig. 1 clearly shows the four links of the articulated four link mechanism: the base link 1 which has two horizontal hinge means 2, 3 separated vertically, the upper and lower crank links 4 and 5, respectively, and the steering shaft supporting link 6 hinged to the two previous ones by hinge shafts 7 and 8.

The fixed support or base link 1 is formed by a baseplate 9 which is fastened by screws 10 to the fixed structure of the vehicle, generally shown at 11. From the front surface of this plate, two vertical and parallel lugs 12 protrude towards the driver's seat, that is towards the right-hand side of Fig. 1. At the free ends of these lugs are fastened the two hinge means 2 and 3 for the crank links 4 and 5. Each of the crank links is in fact formed of two identical links, and each one of these (upper and lower) is hinged to one of the lugs 12 of the fixed support 1.

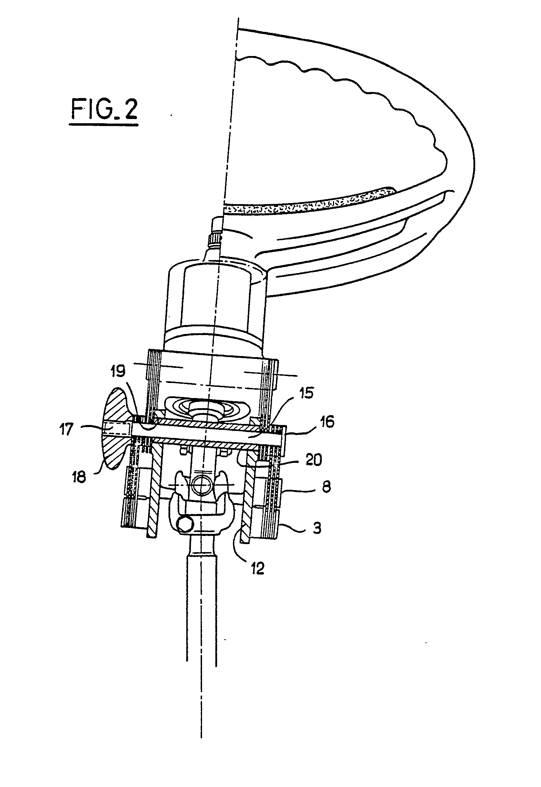

Each of the lower identical crank links 5 is formed of a bundle of thin metal plates which can be seen on Fig. 2; they could also be formed of solid plates of the thickness shown, or more reduced.

In either case, they have the form of a bracket, generally triangular, with holes (not shown) on the apexes which are coupled to the hinge means 2, 3 and 8 mentioned above. As can be seen, the two shafts 2, 3 hinging to the fixed support are relatively close to each other, when the shaft 8 forming the hinge with the steering wheel rotating support 6, is relatively separated from the previous ones. Hinges 3 and 8 are fixed; on the other hand, hinge 2 is defined in crank links 5 by holes 14 shaped as a circumferential arc with its centre at 3, through which extends a hinge shaft 15 mounted between cylindrical drillings of the lugs 12. Accordingly, crank lines 5 can oscillate in a vertical plane within the limits allowed by the arcuate holes 14, and the steering wheel support 6, can be moved vertically within a range which is amplified by the greater distance between shaft 8 and the other hinge shafts 3 and 2.

The hinge shaft 15 crosses the whole assembly transversally; on one side (Fig. 2), is a head 16 which bears against the adjacent bracket, and on the other, a threaded rod 17 protrudes on which is coupled an actuation pommel 18 which also bears against the corresponding bracket. Further, the drillings 19 in the lugs or blades 12 for passage of the shaft 15 are greater in diameter and house a spacer bush 20 fitted around the shaft 15 and the length of which is equal to the distance which transversally separates the two outer surfaces of the blades. Thus, when the pommel 18 is tightened, the brackets 5 and upper crank links 4 are fixed by friction against the ends of the bush, and the position of the elements of the four link mechanism remains stabilised. It will be appreciated that each upper link 4 is also formed of a bundle of small metal plates, like the brackets, and its hinging orifice is formed of a long hole 21 which allows it to oscillate and to move longitudinally in relation to the hinge shaft 15.

The steering wheel shaft support link 5 is a barrel which extends upwards to form a tapered seat 22 which receives the casing assembly 24, fastened by means of screws 23, for the shaft 25 of the steering wheel 13, and the lower end of this shaft 25 is connected to the steering system of the vehicle by means of an articulated transmission device 26 of any conventional type and which must, of course, include a telescopic coupling to allow the vertical movements of the barrel 6.

The operation of the device described is obvious: whilst the pommel 18 is tightened, the assembly remains firmly in the position to which it was adjusted previously, but, as soon as the pommel 18 is loosened, the three links 4, 5 and 6 are freed and can perform the movements defined by the hinges. Thus, the lower crank link 5 can oscillate around the hinge 3 within the limits set by the holes 14, so that the hinge 8 of the shaft support link 6 moves between two separate level limits, whereby varying the height of the steering wheel 13. Also, the upper crank links 4 can oscillate around the hinge shaft 15 and move longitudinally within the limits of the holes 21 so that the barrel 6 oscillates around the hinge 8 for the various slopes of the steering wheel. All these possibilities are shown in diagram form on Fig. 1 by means of dotted lines which represent different positions of the steering wheel 13.

The sequence of the operation thus described as an example can be applied to various modifications included with the scope of the invention. For instance, the hinge 3 could be equipped with a pressure device such as the one used under 2; in this manner the height of the steering wheel would be stabilised by means of this additional pressure device, and the variations of the slope, obtained by loosening the pommel 18, would not alter the previously set height adjustment. The height adjustment would obviously require the loosening of both pressure devices at once. Also, the thin metal plates which form elements 4 and 5 could be intercalated between each other in the zone of hinge 2 with the corresponding increase in the friction surface between the two elements, which would require less effort to fix the assembly in the position adjusted.

### Claims

1. System for adjusting the position of a steering wheel (13), which comprises a deformable four link mechanism including a stationary base member (1) secured to the vehicle, a support member (6) rotatingly supporting the shaft (25) holding said steering wheel, first and second crank links (4, 5) hinged to said base member and said support member, first and second separated hinge means (2, 3) fixed to said base member for connection to said first and second crank links, respectively, the operative length of said first crank link (4) between its hinged connections (2, 7) to said base member and said support member being selectively adjustable, and locking means for locking said deformable four link mechanism in selected configurations, characterized in that said first hinge (2) between said base member (1) and said first crank link (4) comprises a shaft (15) journaled within said base member, said second crank link (5) consisting of a bracket pivotable about said second hinge (3) on said base member and having an end portion formed with an arcuate opening (14) centered in said second hinge (3), said first crank link (4) having an elongated opening (21), said openings (14, 21) being slidable along said shaft (15) of said first hinge (2) which is provided with a manually operable axial pressure device (18) constituting said locking means.

2. System according to claim 1, characterized in that two said four link mechanisms are provided, operating in parallel.

3. System according to claim 1 or to claim 2, characterized in that said first and/or second crank links (2, 5) comprises at least at said level of said hinge shaft (15) a bundle of laminar parts.

### Patentansprüche

1. System zum Verstellen der Position eines Steuerrades (13) mit einem verformbaren Viergelenkmechanismus, der ein am Fahrzeug befestigtes stationäres Basiselement (1), ein Lagerelement (6), das die das Steuerrad haltende Welle (25) drehbar lagert, ein erstes und zweites Kulissenglied (4, 5), die an das Basiselement und das Lagerelement angelenkt sind, und eine erste und zweite Gelenkeinrichtung (2, 3) umfaßt, die am Basiselement zur Verbindung mit dem ersten und zweiten Kulissenglied befestigt sind, wobei die wirksame Länge des ersten Kulissengliedes (4) zwischen seinen Gelenkverbindungen (2, 7) mit dem Basiselement und dem Lagerelement wahlweise verstellbar ist, und einer Verriegelungseinrichtung zum Verriegeln des verformbaren Viergelenkmechanismus in ausgewählten Stellungen, dadurch gekennzeichnet, daß das erste Gelenk (2) zwischen dem Basiselement (1) und dem ersten Kulissenglied (4) eine innerhalb des Basiselementes gelagerte Welle (15) umfasst, daß das zweite Kulissenglied (5) aus einem Arm besteht, der um das zweite Gelenk (3) am Basiselement verschwenkbar ist und einen mit einer bogenförmigen Öffnung (14) ausgebildeten Endabschnitt aufweist, die in dem zweiten Gelenk (3) zentriert ist, daß das erste Kulissenglied (4) eine längliche Öffnung (21) aufweist und daß die Öffnungen (14, 21) entlang der Welle (15) des ersten Gelenks (2) gleitfähig sind, welches mit einer manuell betätigbaren axialen Druckvorrichtung (18) versehen ist, die die Verriegelungseinrichtung bildet.

2. System nach Anspruch 1, dadurch gekennzeichnet, daß zwei Viergelenkmechanismen vorgesehen sind, die parallel zueinander wirken.

3. System nach Anspruch 1 oder 2, dadurch gekennzeichnet, daß das erste und/oder zweite Kulissenglied (4, 5) mindestens auf der Höhe der Gelenkwelle (15) ein Bündel von laminaren Teilen umfaßt.

**Revendications**

1. Système pour régler la position du volant de direction (13) d'un véhicule, comprenant un mécanisme à parallèlogramme déformable qui comporte un élément de base stationnaire (1) fixé au véhicule, un élément support (6) portant à rotation l'arbre (25) qui porte ledit volant de direction, des première et seconde manivelles (4, 5) articulées audit élément de base et audit élément support, des premiers et seconds moyens d'articulation séparés (2, 3) fixés audit élément de base pour l'articuler respectivement avec ladite première manivelle et avec ladite seconde manivelle, la longueur utile de ladite première manivelle (4) entre ses articulations avec ledit élément de base et avec ledit élément support étant sélectivement réglable, et des moyens de verrouillage pour verrouiller ledit mécanisme à parallélogramme déformable dans des configurations choisies, caractérisé en ce que ladite première articulation (2) entre ledit élément de base (1) et ladite première manivelle (4) comprend un axe (15) monté à rotation dans ledit élément de base, ladite seconde manivelle (5) étant constituée par une équerre montée pivotante autour de ladite seconde articulation (3) sur ledit élément de base et ayant une partie d'extrémité munie d'une ouverture (24) en arc de cercle centrée sur ladite seconde articulation (3), ladite première manivelle (4) comportant une ouverture allongée (21), lesdites ouvertures (14, 21) étant montées coulissantes sur ledit arbre (15) de ladite première articulation (2) qui est muni d'un dispositif (18) exerçant une pression axiale actionnable manuellement constituant lesdits moyens de verrouillage.

2. Système selon la revendication 1, caractérisé en ce qu'il comprend deux susdits mécanismes à parallèlogramme déformable qui fonctionnent en parallèle.

3. Système selon la revendication 1 ou la revendication 2, caractérisé en ce que lesdites première et/ou seconde manivelles (4, 5) comprennent, au moins au niveau dudit axe d'articulation (15), un paquet de lamelles.

# 0 045 230

## FIG_1

FIG.2